# EUROPÄISCHE PATENTSCHRIFT

(11) **EP 4 441 571 B1**
(45) Veröffentlichungstag und Bekanntmachung des Hinweises auf die Patenterteilung: **26.08.2026**
(21) Anmeldenummer: 23704259.3
(22) Anmeldetag: 25.01.2023
(51) Int. Cl.: G05B 23/02

(54) **COMPUTER-IMPLEMENTIERTES VERFAHREN ZUR ERKENNUNG VON ABWEICHUNGEN IN EINEM HERSTELLUNGSPROZESS**
COMPUTER-IMPLEMENTED METHOD FOR DETECTING DEVIATIONS IN A MANUFACTURING PROCESS
PROCÉDÉ MIS EN UVRE PAR ORDINATEUR DE DÉTECTION D'ÉCARTS DANS UN PROCESSUS DE FABRICATION

(30) Priorität: 26.01.2022 EP 22153511
(43) Veröffentlichungstag der Anmeldung: 09.10.2024
(73) Patentinhaber: Siemens Aktiengesellschaft, 80333 München (DE)
(72) Erfinder: JOKSCH, Martin, 3423 St.Andrä-Wördern (AT); EDER, Jana, 1180 Wien (AT); SCHALL, Daniel, 2020 Hollabrunn (AT); SÜNDERMANN, Axel, 1220 Wien (AT)
(74) Vertreter: Siemens Patent Attorneys
(86) Internationale Anmeldenummer: PCT/EP2023/051823
(87) Internationale Veröffentlichungsnummer: WO 2023/144216

(56) Entgegenhaltungen:
- CN-A- 113 671 917
- US-A1- 2018 275 642
- US-A1- 2019 302 707

## Beschreibung

Die Erfindung betrifft ein computer-implementiertes Verfahren, eine Rechenvorrichtung und ein System zur Erkennung von Abweichungen in einem Herstellungsprozess mit Prozessparametern, wobei eine Rechenvorrichtung mit einem Speicher vorgesehen ist.

Ferner betrifft die Erfindung ein Computerprogramm, einen elektronisch lesbaren Datenträger und ein Datenträgersignal.

Chargenprozesse (engl. "batch") finden sich im Allgemeinen in Industrien, die kleine Materialmengen herstellen, die durch chemische, elektrochemische oder biologische Reaktionen hergestellt werden. Die Steuerung von Chargenprozessen ist ein sehr komplexer und kontinuierlicher Prozess.

Eine "Goldene Charge", definiert als Referenz. Die Goldene Chargen-Kennzeichnung ermöglicht es, eine Anlagenprozess-Betriebskurve zu erreichen, welche ein optimale Produktmischung zusammen mit einer verbesserten Qualität des Endprodukts liefert.

Eine Hauptkomponentenanalyse (PCA, engl. "Principle Component Analysis") ist das Werkzeug zur Analyse des Datensatzes. Die Hauptkomponentenanalyse (PCA) wird zur Dimensionsreduktion verwendet. Das bedeutet, dass der Golden Batch in Echtzeit in einem 2D-Plot beobachtet und beispielsweise die Abweichung des 95 Konfidenzintervalls (CI) vom Golden Batch ermittelt werden kann. Eine Abweichung zeigt dann an, dass ein Eingriff in den Prozess notwendig ist.

In derzeitige Verfahren können jedoch Nachteile auftreten. So ist beispielsweise mit der Hauptkomponentenanalyse die Identifizierung einzelner Driftparameter nicht möglich, lediglich aufwändige nachträgliche statistische Messungen.

Ferner können häufig ein einzelner abweichender Prozessparameter oder eine kleine Anzahl von abweichenden Prozessparametern nicht erkannt werden, da sie die Hauptkomponentenanalyse nicht dazu bringen, Grenzen der Analyse zu überschreiten.

Außerdem haben Batch-Prozesse oft eine unterschiedliche Reifezeit, da die Hauptkomponentenanalyse pro Zeitpunkt berechnet wird, wobei eine Berücksichtigung der Chargenreife erforderlich ist.

In der Veröffentlichung US 2018/275642 A1 ist ein Verfahren gezeigt, dessen Ziel es ist, einen Schwellenwert für die Anomalie-Erkennung einfach und genau festzulegen, und die Verarbeitung des Lernens eines Vorhersagemodells auszuführen, das ein Verhalten eines Überwachungszielgeräts basierend auf Betriebsdaten des Geräts vorhersagt und eine Anomalie-Bewertung anpasst, sodass die Anomalie-Bewertung für Betriebsdaten bei normalem Betrieb innerhalb eines vorgegebenen Bereichs liegt, wobei die Anomalie-Bewertung auf einer Abweichung der vom Überwachungszielgerät erfassten Betriebsdaten von einem vom Vorhersagemodell erhaltenen Vorhersageergebnis basiert, die Verarbeitung des Erkennens einer Anomalie oder eines Anzeichens einer Anomalie basierend auf der angepassten Anomalie-Bewertung und die Verarbeitung des Anzeigens von Informationen zu mindestens der Anomalie-Bewertung und einem Ergebnis der Erkennung auf einem Ausgabegerät.

Die Veröffentlichung CN 113 671 917 A betrifft ein Verfahren zur Erkennung eines anormalen Zustands eines mehrstufigen industriellen Prozesses, eines Systems und einer Ausrüstung und zielt darauf ab, das Problem der unzureichenden Erkennungsgenauigkeit eines anormalen Produktionszustands zu lösen, der sich in einem anormalen Änderungstrend einer überwachten mehrdimensionalen Variable in einem komplexen industriellen Produktionsprozess widerspiegelt.

Die Veröffentlichung US 2019/302707 A1 betrifft eine Vorrichtung zur Steuerung eines Systems mit einer Vielzahl von Signalquellen, die eine Vielzahl von Ereignissen verursachen, umfasst eine Eingangsschnittstelle zum Empfangen von Signalen von den Signalquellen, einen Speicher zum Speichern eines neuronalen Netzwerks, das darauf trainiert ist, einen Steuerzustand des Systems zu diagnostizieren, einen Prozessor zum Übermitteln der Signale an das neuronale Netzwerk, um den Steuerzustand des Systems zu erzeugen, und einen Controller zum Ausführen einer Steueraktion, die entsprechend dem Steuerzustand des Systems ausgewählt wird. Das neuronale Netzwerk umfasst eine Abfolge von Schichten, wobei jede Schicht eine Reihe von Knoten umfasst, wobei jeder Knoten von mindestens einer Eingangsschicht und einer ersten verborgenen Schicht, die der Eingangsschicht folgt, einer Signalquelle im System entspricht. Ein Paar von Knoten aus benachbarten Schichten, die einem Paar verschiedener Signalquellen entsprechen, sind im neuronalen Netzwerk nur dann verbunden, wenn die Wahrscheinlichkeit des nachfolgenden Auftretens der Ereignisse im Paar der verschiedenen Signalquellen über einem Schwellenwert liegt, sodass das neuronale Netzwerk ein teilweise verbundenes neuronales Netzwerk ist.

Es ist daher Aufgabe der Erfindung die genannten Nachteile zu überwinden.

Die erfindungsgemäße Aufgabe wird durch ein Verfahren eingangs genannter Art gelöst, wobei folgende Schritte ausführt werden:
a) Bereitstellen von Referenz-Prozessdaten eines Referenz-Herstellungsprozesses, welcher Referenz-Parameter des Herstellungsprozesses umfasst, an die Rechenvorrichtung,
b) Erzeugen und Trainieren eines Prozess-Modells mit Modell-Knoten und zugeordneten Modell-Gewichten auf Basis eines Autoencoders mit den Referenz-Prozessdaten,
c) Zumindest teilweises Zuordnen von Modell-Knoten des Prozess-Modells zu Prozessparametern des Herstellungsprozesses,
d) Bereitstellen von aktuellen Prozessdaten aus einem aktuellen Herstellungsprozess, welcher aktuelle Parameter des Herstellungsprozesses umfasst, an die Rechenvorrichtung,
e) Ermitteln von Prozess-Abweichungen der aktuellen Prozessdaten mithilfe des Prozess-Modells durch Bestimmung eines Rekonstruktionsfehlers durch die Rechenvorrichtung, und Ausgeben der Modell-Gewichte der Modell-Knoten, sowie Ermitteln individueller Beiträge von Modell-Knoten an den Prozess-Abweichungen und Bestimmen zumindest eines individuellen Beitrags, welcher außerhalb eines vorbestimmten Wertebereichs für den jeweiligen Beitrag liegt,
f) Schätzen des zukünftigen Verlaufs des Rekonstruktionsfehlers aus dem aktuell bestimmten Rekonstruktionsfehler und zumindest eines vorher bestimmten Rekonstruktionsfehlers für eine vorbestimmte Zeitdauer, und Speichern des Rekonstruktionsfehler im Speicher als zumindest ein vorher bestimmter Rekonstruktionsfehler für eine nachfolgende Schätzung,
g) Prüfen, ob der geschätzte zukünftige Verlauf des Rekonstruktionsfehlers für die vorbestimmte Zeitdauer innerhalb eines vorbestimmten Wertebereichs liegt, falls Ja, fortsetzen bei Schritt d), sonst Ausgeben eines Alarms und Übermitteln des im Schritt e) ermittelten zumindest eines individuellen Beitrags an den Referenz-Herstellungsprozess und Verwenden bei einem nachfolgenden Herstellungsprozess im Schritt d).

Dadurch ist es möglich, individuelle Abweichungen in ProzessParametern zu identifizieren.

Ferner ist es möglich, die Reaktionszeit, also die Zeit bis zum Ergreifen einer entsprechend notwendigen Maßnahme, zu erfassen.

Außerdem wird eine Feedback-Schleife mit einem Kontrollsystem geschaffen, um eine entsprechende Maßnahme zu ergreifen, sowie eine Rückmeldung von Drift-Parametern zu erlauben.

Die Rechenvorrichtung kann also beispielsweise bei einem Alarm dem Herstellungsprozess durch eine Rückkoppelschleife melden, dass sich der Herstellungsprozess aktuell vom Referenz-Herstellungsprozess unterscheidet und dementsprechende Maßnahmen können rasch ausgeführt werden, um den Herstellungsprozess wieder dem Referenz-Herstellungsprozess anzunähern. Dies kann durch Stellgrößen erfolgen, beispielsweise indem ein Bearbeitungsgeschwindigkeit innerhalb des Referenz-Herstellungsprozesses angepasst wird.

Dadurch folgt, dass keine weiteren Beurteilungen zur Chargenreife mehr notwendig sind.

Unter einem individuellen Beitrag von Modell-Knoten wird eine Teilmenge von Modell-Knoten verstanden, welche in einem Zusammenhang mit zumindest einem Prozessparameter des Herstellungsprozesses stehen. Dadurch kann gezielt und individuell auf einen ausgewählten, beispielsweise auch vorbestimmten Prozessparameter eingewirkt werden, beispielsweise indem jener Modell-Knoten identifiziert wird, der den signifikantesten Beitrag zu einem Prozessparameter liefert, wobei zur Feststellung des signifikantesten Beitrags beispielsweise ein vorbestimmter Wertebereich für diesen Beitrag angewandt wird. Ein "logischer" Prozessparameter kann dabei durch einen oder mehrere Modell-Knoten repräsentiert werden, wobei auch eine Überlappung mit anderen Prozessparametern möglich ist.

Ein Autoencoder ist ein künstliches neuronales Netz, welches dazu genutzt wird, effiziente Codierungen zu lernen. Das Ziel eines Autoencoders ist es, eine komprimierte Repräsentation (Encoding) für einen Satz Daten zu lernen und somit auch wesentliche Merkmale zu extrahieren. Dadurch kann er zur Dimensionsreduktion genutzt werden.

Ein Autoencoder benutzt drei oder mehr Schichten, nämlich eine Eingabeschicht mit Eingabe-Knoten oder Neuronen, einige signifikant kleinere Schichten, die das Encoding bilden, und eine Ausgabeschicht, in der jedes Neuron die gleiche Bedeutung hat wie das entsprechende in der Eingabeschicht.

Wenn lineare Neuronen, das heißt lineare Modell-Knoten, benutzt werden, ist ein Autoencoder einer Hauptkomponentenanalyse sehr ähnlich.

In einer Weiterbildung der Erfindung ist es zusätzlich vorgesehen, dass im Autoencoder nichtlineare Modell-Knoten verwendet werden.

Nichtlinearität von Neuronen, das heißt nichtlineare Modell-Knoten, bedeutet, dass die Ausgabe an einem beliebigen Neuron nicht aus einer linearen Funktion der Eingabe reproduziert werden kann.

Dies wird durch die Verwendung einer geeigneten Aktivierungsfunktion erreicht, wie zum Beispiel eine Sigmoid- oder eine ReLU-Funktion.

Eine Sigmoidfunktion, Schwanenhalsfunktion, Fermifunktion oder S-Funktion ist eine mathematische Funktion mit einem S-förmigen Graphen. Im Allgemeinen ist eine Sigmoidfunktion eine beschränkte und differenzierbare reelle Funktion mit einer durchweg positiven oder durchweg negativen ersten Ableitung und genau einem Wendepunkt. Sigmoidfunktionen können in künstlichen neuronalen Netzen als Aktivierungsfunktion verwendet werden, da der Einsatz von differenzierbaren Funktionen die Verwendung von Lernmechanismen ermöglicht. Als Aktivierungsfunktion eines künstlichen Neurons wird die Sigmoidfunktion auf die Summe der gewichteten Eingabewerte angewendet, um die Ausgabe des Neurons zu erhalten.

Im Kontext künstlicher neuronaler Netze ist ein "Rectifier" (deutsch "Gleichrichter") eine Aktivierungsfunktion eines künstlichen Neurons. Diese Aktivierungsfunktion kann genutzt werden, um spezifische Erregung und unspezifische Hemmung zu trennen. Ein Training tiefer Netzwerke mit rektifizierenden Aktivierungsfunktionen ist erfolgreicher als beispielsweise mit der Sigmoidfunktion. Eine Einheit, die den Rectifier verwendet, wird auch als "rectified linear unit" (ReLU) bezeichnet.

Durch eine Nichtlinearität in Aktivierungsfunktionen in einem neuronalen Netzwerk kann eine nichtlineare Entscheidungsgrenze über nichtlineare Kombinationen des Gewichts und der Eingaben erzeugt werden und im Gegensatz zur Hauptkomponentenanalyse können komplexere, nichtlineare Zusammenhänge zwischen den Prozessparametern abgebildet werden.

In einer Weiterbildung der Erfindung ist es vorgesehen, dass der zumindest eine vorher bestimmte Rekonstruktionsfehler im Schritt f) Null beträgt, falls der Verfahrensschritt f) erstmalig ausgeführt wird.

In einer Weiterbildung der Erfindung ist es vorgesehen, dass das Schätzen mithilfe eines Regressionsverfahrens erfolgt.

In einer Weiterbildung der Erfindung ist es vorgesehen, dass das Prozess-Modell ferner Eingangs-Knoten mit jeweiligen Eingangs-Gewichten, welche über alle Eingangs-Gewichte normiert sind, und Ausgangs-Knoten mit jeweiligen Ausgangs-Gewichten, welche über alle Ausgangs-Gewichte normiert sind, umfasst, zwischen welchen die Modell-Knoten gebildet sind, und der zumindest ein individueller Beitrag von Modell-Knoten an den Prozess-Abweichungen ermittelt wird, indem jeweils ein Modell-Gewicht für zumindest einen individueller Eingangs-Knoten und zumindest einen individueller Ausgangs-Knoten, welche jeweils über alle Eingangs-Knoten bzw. jeweils über alle Ausgangs-Knoten normiert sind, mit einem jeweiligen vorbestimmten Wertebereich für das jeweilige Modell-Gewicht verglichen werden, und der zumindest eine individuelle Beitrag jenem zumindest jenem Knoten entspricht, dessen Gewicht im vorbestimmten Wertebereich liegt.

Die erfindungsgemäße Aufgabe wird auch durch eine Rechenvorrichtung zur Erkennung von Abweichungen in einem Herstellungsprozess mit Prozessparametern gelöst, umfassend eine Rechenvorrichtung mit einem Speicher, welche dazu eingerichtet ist das erfindungsgemäße Verfahren auszuführen.

Die erfindungsgemäße Aufgabe wird auch durch ein System zur Erkennung von Abweichungen in einem Herstellungsprozess mit Prozessparametern gelöst, umfassend eine Produktionsanlage und eine erfindungsgemäße Vorrichtung.

Die erfindungsgemäße Aufgabe wird auch durch ein Computerprogramm gelöst, umfassend Befehle, welche bei deren Ausführung durch einen Computer diesen veranlassen, das erfindungsgemäße Verfahren auszuführen.

Die erfindungsgemäße Aufgabe wird auch durch einen elektronisch lesbaren Datenträger mit darauf gespeicherten lesbaren Steuerinformationen gelöst, welche zumindest das erfindungsgemäße Computerprogramm umfassen und derart ausgestaltet sind, dass sie bei Verwendung des Datenträgers in einer Recheneinrichtung das erfindungsgemäße Verfahren durchführen.

Die erfindungsgemäße Aufgabe wird auch durch ein Datenträgersignal gelöst, welches das erfindungsgemäße Computerprogramm überträgt.

Die Erfindung wird nachfolgend anhand eines in den beigeschlossenen Zeichnungen dargestellten Ausführungsbeispiels näher erläutert. In den Zeichnungen zeigt:
- Fig. 1: ein Ausführungsbeispiel für ein Flussdiagramm für das erfindungsgemäße Verfahren,
- Fig. 2: ein Ausführungsbeispiel für ein erfindungsgemäßes System,
- Fig. 3: ein Beispiel für ein Autoencoder-Prozess-Modell.

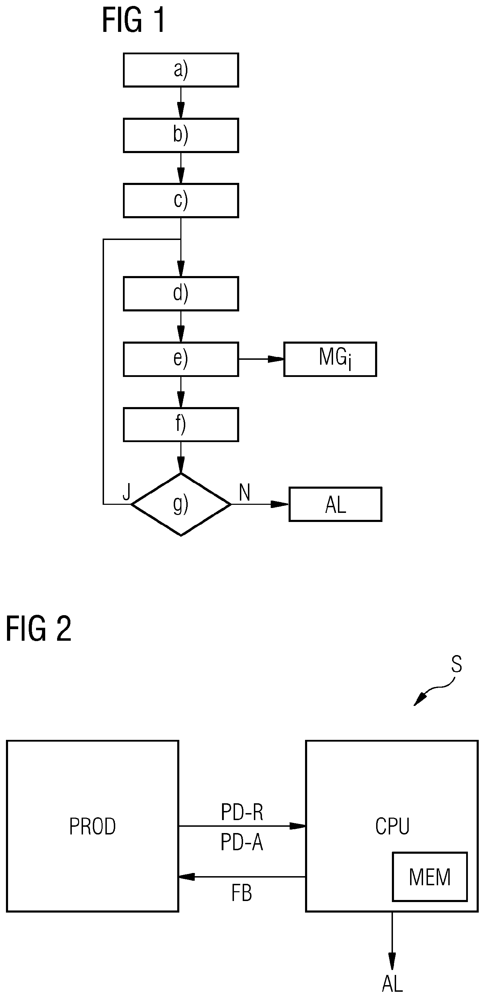

**Fig.** 1 zeigt ein Ausführungsbeispiel für ein Flussdiagramm für das erfindungsgemäße Verfahren.

Das Verfahren zur Erkennung von Abweichungen in einem Herstellungsprozess mit Prozessparametern ist in einer Rechenvorrichtung CPU mit einem Speicher MEM computerimplementiert.

Ein Prozessparameter kann beispielsweise Betriebstemperatur, Betriebsdruck, Stromaufnahme oder Produkteigenschaften des hergestellten Produkts wie erfasste Abmessungen des hergestellten Produkts sein.

Ein Prozessparameter kann durch eine Messgröße mithilfe eines entsprechenden Sensor-Mittels durch eine Rechenvorrichtung erfasst werden, sowie durch eine Stellgröße mithilfe eines entsprechenden Aktuator-Mittels beispielsweise durch eine Rechenvorrichtung gesteuert werden.

Der Herstellungsprozess mit Prozessparametern kann beispielsweise mehrere Prozessschritte aufweisen, welche durch die Prozessparameter einzeln oder gemeinsam konfigurierbar sind.

Es ist aber auch möglich, dass die Prozessparameter lediglich einen einzigen Prozessschritt spezifizieren.

Ferner sind Kombinationen von mehreren Prozessparametern mit einem oder mehreren Prozessschritten möglich.

Folgende Schritte werden dabei ausführt:
a) Bereitstellen von Referenz-Prozessdaten eines Referenz-Herstellungsprozesses, welcher Referenz-Parameter des Herstellungsprozesses umfasst, an die Rechenvorrichtung CPU,
b) Erzeugen und Trainieren eines Prozess-Modells PM mit Modell-Knoten ***MKᵢ*** und zugeordneten Modell-Gewichten ***MGᵢ*** auf Basis eines Autoencoders mit den Referenz-Prozessdaten, wobei der Autoencoder auf linearen oder nichtlinearen Modell-Knoten ***MKᵢ*** basiert,
c) Zumindest teilweises Zuordnen von Modell-Knoten des Prozess-Modells zu Prozessparametern des Herstellungsprozesses,
d) Bereitstellen von aktuellen Prozessdaten aus einem aktuellen Herstellungsprozess, welcher aktuelle Parameter des Herstellungsprozesses umfasst, an die Rechenvorrichtung CPU,
e) Ermitteln von Prozess-Abweichungen der aktuellen Prozessdaten mithilfe des Prozess-Modells durch Bestimmung eines Rekonstruktionsfehlers und Ausgeben der Modell-Gewichte ***MGᵢ*** der Modell-Knoten ***MKᵢ,*** sowie Ermitteln individueller Beiträge von Modell-Knoten an den Prozess-Abweichungen und Bestimmen zumindest eines individuellen Beitrags, welcher außerhalb eines vorbestimmten Wertebereichs für den jeweiligen Beitrag liegt,
f) Schätzen des zukünftigen Verlaufs des Rekonstruktionsfehlers aus dem aktuell bestimmten Rekonstruktionsfehler und zumindest eines vorher bestimmten Rekonstruktionsfehlers für eine vorbestimmte Zeitdauer, und Speichern des Rekonstruktionsfehler im Speicher MEM als zumindest ein vorher bestimmter Rekonstruktionsfehler für eine nachfolgende Schätzung,
g) Prüfen, ob der geschätzte zukünftige Verlauf des Rekonstruktionsfehlers für die vorbestimmte Zeitdauer innerhalb eines vorbestimmten Wertebereichs liegt, falls ja, fortsetzen bei Schritt d), sonst Ausgeben eines Alarms AL und Übermitteln des im Schritt e) ermittelten zumindest eines individuellen Beitrags an den Referenz-Herstellungsprozess und Verwenden bei einem nachfolgenden Herstellungsprozess im Schritt d).

Durch die Schritte d) bis g) ist eine bedingte Wiederholungsschleife gebildet.

Das Übermitteln des im Schritt e) ermittelten zumindest eines individuellen Beitrags an den Referenz-Herstellungsprozess und Verwenden bei einem nachfolgenden Herstellungsprozess im Schritt d) stellt eine weitere Wiederholungsschleife dar, welche in der Figur zur besseren Übersicht nicht gesondert dargestellt ist.

Im ersten Durchlauf liegt noch kein bereits bestimmter Rekonstruktionsfehler im Speicher MEM vor. Daher wird der zumindest eine vorher bestimmte Rekonstruktionsfehler im Schritt f) mit Null angenommen, falls der Schritt f) erstmalig ausgeführt wird. Dies entspricht der Annahme, dass der Referenz-Herstellungsprozess im Schritt a) die Bezugsgröße bildet und daher noch keine Abweichung ausweist.

Das Schätzen erfolgt beispielsweise mithilfe eines Regressionsverfahrens.

Es ist besonders vorteilhaft, für den Autoencoder nichtlineare Modell-Knoten ***MKᵢ*** einzusetzen, da dadurch eine nichtlineare Entscheidungsgrenze über nichtlineare Kombinationen des Gewichts und der Eingaben erzeugt werden können.

**Fig. 2** stellt ein Ausführungsbeispiel für ein erfindungsgemäßes System S dar.

Eine Produktionsanlage PROD führt einen Herstellungsprozess aus, erzeugt dabei Prozessdaten, beispielsweise durch Sensoren und stellt diese Prozessdaten einer Rechenvorrichtung CPU mit einem Speicher MEM bereit.

Die Prozessdaten können entweder Referenz-Daten PD-R sein, welche bei Ausführung eines Referenz-Herstellungsprozesses erzeugt werden.

Andererseits können die Prozessdaten aktuelle ProzessDaten PD-A sein, welche fortlaufend bei Ausführung eines Referenz-Herstellungsprozesses erzeugt werden und einen jeweils aktuell ausgeführten Herstellungsprozess abbilden.

Ist die Prüfung, ob der geschätzte zukünftige Verlauf des Rekonstruktionsfehlers für die vorbestimmte Zeitdauer innerhalb eines vorbestimmten Wertebereichs liegt, negativ, wird ein Alarms AL ausgegeben.

Optional kann die Rechenvorrichtung CPU bei einem Alarm der Produktionsanlage PROD, das heißt dem Herstellungsprozess, durch eine Rückkoppelschleife FB eine entsprechende Steuer-Operation melden, welche zu einer Reduktion des Rekonstruktionsfehlers führen soll.

Die Rückkoppelschleife FB kann auch lediglich Rohdaten aus dem zuvor, durch die Rechenvorrichtung CPU ausgeführten Verfahren übermitteln und die Produktionsanlage PROD kann die notwendige Steuer-Operation selbst ermitteln und ausführen.

Zu den vom Verfahren ermittelten Daten zählen insbesondere die ermitteln individuellen Beiträge von Modell-Knoten an den Prozess-Abweichungen, da dadurch gezielt Anlagenteile gesteuert werden können, um die Qualität der Produktion zu verbessern und den Rekonstruktionsfehler zu verringern.

Dies kann beispielsweise durch die Ermittlung von individuellen Eingangs-Knoten unter Verwendung von deren signifikantesten, also wertmäßig größten Eingangs-Gewichten durchgeführt werden.

Mehrere Eingangs-Knoten können beispielsweise einen "logischen" Eingangs-Knoten bilden, welcher eine Prozess-Größe zugeordnet werden kann, beispielsweise ein Temperatur- oder Druck-Messwert.

Ein oder mehrere individuellen Beiträge können ermittelt werden, indem geprüft wird, ob ein Wert außerhalb eines vorbestimmten Wertebereichs für den jeweiligen Beitrag liegt.

Wird die Produktion durch die Rückkoppelschleife FB mit einem oder mehreren individuellen Beiträgen dementsprechend angepasst und somit verbessert, so kann für nachfolgende Herstellungsprozesse eine Reduktion des Rekonstruktionsfehlers erreicht werden.

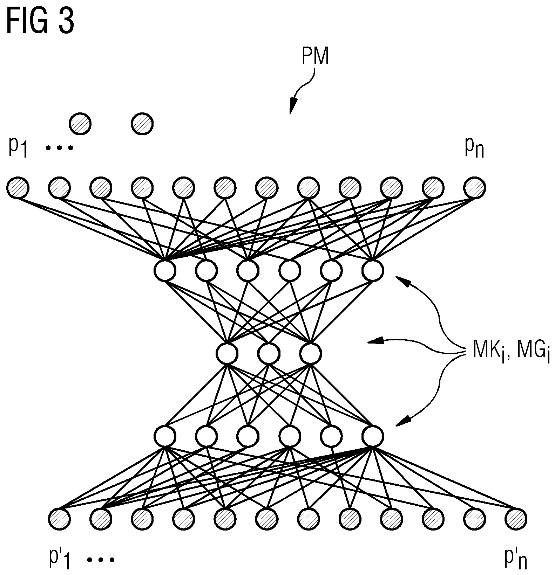

**Fig. 3** zeigt ein Beispiel für ein Prozess-Modell PM auf Basis maschinellen Lernens, konkret in Form eines Autoencoders.

Mehrere Eingangs-Knoten mit den Eingangs-Gewichten ***p*₁** *- **pₙ*** und Ausgangs-Knoten mit den Ausgangs-Gewichten ${p}_{1}^{′} - {p}_{n}^{′}$ sind über mehrere Modell-Knoten ***MKᵢ*** verbunden und bilden so einen Autoencoder.

Jeder Modell-Knoten ***MKᵢ,*** das heißt Eingangs-Knoten, Ausgangs-Knoten und Knoten dazwischenliegender Lagen, weist ein jeweils zugeordnetes Modell-Gewicht ***MGᵢ*** in Form eines numerischen Werts auf.

Das Prozess-Modell PM wird erzeugt und mithilfe von Prozessdaten des Herstellungsprozesses trainiert.

Die Prozessdaten PD-R und PD-A können durch Sensoren erzeugt werden und bilden durch entsprechende numerische Messwerte Zustände im Herstellungsprozess ab, wie beispielsweise Betriebstemperatur, Betriebsdruck, Stromaufnahme, Produkteigenschaften des hergestellten Produkts wie erfasste Abmessungen des hergestellten Produkts.

Der Rekonstruktionsfehler RF kann im Schritt e) durch folgenden Zusammenhang ermittelt werden: $RF = \sqrt{{\left({p}_{1}-{p}_{1}^{′}\right)}^{2} + {\left({p}_{2}-{p}_{2}^{′}\right)}^{2} + ⋯}$

Das Prozess-Modell kann Eingangs-Knoten mit jeweiligen Eingangs-Gewichten ***p*₁ *- pₙ*** aufweisen, welche über alle Eingangs-Gewichte ***p*₁** *- **pₙ*** normiert sind, also beispielweise alle Gewichte in einem Wertebereich zwischen 0 und 1 liegen.

Diese Normierung kann demnach beispielweise so erfolgen, indem die einzelnen Gewichte auf das wertmäßig größte Gewicht bezogen werden.

Das Prozess-Modell kann ferner Ausgangs-Knoten mit jeweiligen Ausgangs-Gewichten ${p}_{1}^{′} - {p}_{n}^{′}$ aufweisen, welche über alle Ausgangs-Gewichte ${p}_{1}^{′} - {p}_{n}^{′}$ normiert sind, also beispielweise wie zuvor, alle Gewichte in einem Wertebereich zwischen 0 und 1 liegen.

Die Modell-Knoten ***MKᵢ*** sind zwischen den Eingangs-Knoten und Ausgangs-Knoten gebildet.

Der individuelle Beitrag von Modell-Knoten an den Prozess-Abweichungen kann ermittelt werden, indem jeweils ein Modell-Gewicht ***MGᵢ*** für einen individuellen Eingangs-Knoten und einen individuellen Ausgangs-Knoten mit einem vorbestimmten Wertebereich für das jeweilige Modell-Gewicht verglichen wird.

Der individuelle Beitrag entspricht beispielweise jenem Knoten, dessen Gewicht im vorbestimmten Wertebereich liegt, oder das wertmäßig größte Gewicht als individueller Beitrag gewählt wird.

Ebenso können mehrere Gewichte ein gemeinsames "logisches" Gewicht bilden, welches als individueller Beitrag gewählt werden kann.

### Bezugszeichenliste:

AL Alarm
CPU Rechenvorrichtung
FB Feedback, Rückkopplung
J Ergebnis der Prüfung ist Ja
MEM Speicher
***MGᵢ*** Modell-Gewicht für Modell-Knoten i
***MKᵢ*** Modell-Knoten i
N Ergebnis der Prüfung ist Nein
***p*₁ - *pₙ*** Eingangs-Gewicht eines Eingangs-Knotens
${p}_{1}^{′} - {p}_{n}^{′}$ Ausgangs-Gewicht eines Ausgangs-Knotens
PD-A aktuelle Prozessdaten
PD-R Referenz-Prozessdaten
PM Prozess-Modell, Autoencoder
PROD Produktionsanlage, führt Herstellungsprozess aus

## Patentansprüche

1. Computer-implementiertes Verfahren zur Erkennung von Abweichungen in einem Herstellungsprozess mit Prozessparametern, wobei eine Rechenvorrichtung (CPU) mit einem Speicher (MEM) vorgesehen ist, **dadurch gekennzeichnet, dass** folgende Schritte ausführt werden:
a) Bereitstellen von Referenz-Prozessdaten eines Referenz-Herstellungsprozesses, welcher Referenz-Parameter des Herstellungsprozesses umfasst, an die Rechenvorrichtung (CPU),
b) Erzeugen und Trainieren eines Prozess-Modells mit Modell-Knoten **(*MKᵢ*)** und zugeordneten Modell-Gewichten **(*MGᵢ*)** auf Basis eines Autoencoders mit den Referenz-Prozessdaten,
c) Zumindest teilweises Zuordnen von Modell-Knoten des Prozess-Modells zu Prozessparametern des Herstellungsprozesses,
d) Bereitstellen von aktuellen Prozessdaten aus einem aktuellen Herstellungsprozess, welcher aktuelle Parameter des Herstellungsprozesses umfasst, an die Rechenvorrichtung (CPU),
e) Ermitteln von Prozess-Abweichungen der aktuellen Prozessdaten mithilfe des Prozess-Modells durch Bestimmung eines Rekonstruktionsfehlers und Ausgeben der Modell-Gewichte **(*MGᵢ*)** der Modell-Knoten **(*MKᵢ*)*,*** sowie Ermitteln individueller Beiträge von Modell-Knoten an den Prozess-Abweichungen und Bestimmen zumindest eines individuellen Beitrags, welcher außerhalb eines vorbestimmten Wertebereichs für den jeweiligen Beitrag liegt,
f) Schätzen des zukünftigen Verlaufs des Rekonstruktionsfehlers aus dem aktuell bestimmten Rekonstruktionsfehler und zumindest eines vorher bestimmten Rekonstruktionsfehlers für eine vorbestimmte Zeitdauer, und Speichern des Rekonstruktionsfehler im Speicher (MEM) als zumindest ein vorher bestimmter Rekonstruktionsfehler für eine nachfolgende Schätzung,
g) Prüfen, ob der geschätzte zukünftige Verlauf des Rekonstruktionsfehlers für die vorbestimmte Zeitdauer innerhalb eines vorbestimmten Wertebereichs liegt, falls Ja (J), fortsetzen bei Schritt d), sonst (N) Ausgeben eines Alarms (AL) und Übermitteln des im Schritt e) ermittelten zumindest eines individuellen Beitrags an den Referenz-Herstellungsprozess und Verwenden bei einem nachfolgenden Herstellungsprozess im Schritt d).

2. Verfahren nach dem vorhergehenden Anspruch, wobei im Autoencoder nichtlineare Modell-Knoten **(*MKᵢ*)** verwendet werden, vorzugsweise mithilfe einer Sigmoid- oder einer ReLU-Funktion.

3. Verfahren nach einem der vorhergehenden Ansprüche, wobei der zumindest eine vorher bestimmte Rekonstruktionsfehler im Schritt f) Null beträgt, falls der Verfahrensschritt f) erstmalig ausgeführt wird.

4. Verfahren nach einem der vorhergehenden Ansprüche, wobei das Schätzen mithilfe eines Regressionsverfahrens erfolgt.

5. Verfahren nach einem der vorhergehenden Ansprüche, wobei das Prozess-Modell ferner Eingangs-Knoten mit jeweiligen Eingangs-Gewichten **(*p*₁** *-* ***pₙ*)*,*** welche über alle Eingangs-Gewichte **(*p*₁** *-* ***pₙ*)** normiert sind, und Ausgangs-Knoten mit jeweiligen Ausgangs-Gewichten ( ${p}_{1}^{′} - {p}_{n}^{′}$), welche über alle Ausgangs-Gewichte ( ${p}_{1}^{′} - {p}_{n}^{′}$) normiert sind, umfasst, zwischen welchen die Modell-Knoten **(*MKᵢ*)** gebildet sind, und der zumindest ein individueller Beitrag von Modell-Knoten an den Prozess-Abweichungen ermittelt wird, indem jeweils ein Modell-Gewicht **(*MGᵢ*)** für zumindest einen individueller Eingangs-Knoten und zumindest einen individueller Ausgangs-Knoten, welche jeweils über alle Eingangs-Knoten bzw. jeweils über alle Ausgangs-Knoten normiert sind, mit einem jeweiligen vorbestimmten Wertebereich für das jeweilige Modell-Gewicht verglichen werden, und der zumindest eine individuelle Beitrag jenem zumindest jenem Knoten entspricht, dessen Gewicht im vorbestimmten Wertebereich liegt.

6. Rechenvorrichtung (CPU) zur Erkennung von Abweichungen in einem Herstellungsprozess mit Prozessparametern, umfassend einen Speicher (MEM), welche dazu eingerichtet ist das Verfahren nach einem der vorhergehenden Ansprüche auszuführen.

7. System (S) zur Erkennung von Abweichungen in einem Herstellungsprozess mit Prozessparametern, umfassend eine Produktionsanlage (PROD) und eine Vorrichtung (CPU) nach dem vorhergehenden Anspruch.

8. Computerprogramm, umfassend Befehle, welche bei deren Ausführung durch einen Computer diesen veranlassen, das Verfahren nach einem der Ansprüche 1 bis 5 auszuführen.

9. Elektronisch lesbarer Datenträger mit darauf gespeicherten lesbaren Steuerinformationen, welche zumindest das Computerprogramm nach dem vorhergehenden Anspruch umfassen und derart ausgestaltet sind, dass sie bei Verwendung des Datenträgers in einer Recheneinrichtung das Verfahren nach einem der Ansprüche 1 bis 5 durchführen.

10. Datenträgersignal, welches das Computerprogramm nach Anspruch 8 überträgt.

## Claims

1. Computer-implemented method for detecting deviations in a production process with process parameters, wherein a computing device (CPU) with a memory (MEM) is provided, **characterised in that** the following steps are executed:
a) providing reference process data from a reference production process, which comprises reference parameters for the production process, to the computing device (CPU),
b) generating and training a process model with model nodes **(*MKᵢ*)** and assigned model weights **(*MGᵢ*)** on the basis of an autoencoder using the reference process data,
c) at least partially assigning model nodes of the process model to process parameters of the production process,
d) providing current process data from a current production process, which comprises current parameters of the production process, to the computing device (CPU),
e) ascertaining process deviations of the current process data using the process model by determining a reconstruction error and outputting the model weights **(*MGᵢ*)** of the model nodes **(*MKᵢ*),** as well as ascertaining individual contributions of model nodes to the process deviations and determining at least one individual contribution that lies outside a predetermined value range for the respective contribution,
f) estimating the future course of the reconstruction error from the currently determined production error and at least one previously determined reconstruction error for a predetermined duration and storing the reconstruction error in the memory (MEM) as at least one previously determined reconstruction error for a subsequent estimate,
g) checking whether the estimated future course of the reconstruction error for the predetermined duration lies within a predetermined value range and, if so (Y), continuing with step d), otherwise (N) outputting an alarm (AL) and transmitting the at least one individual contribution ascertained in step e) to the reference production process and using it in a subsequent production process in step d).

2. Method according to the preceding claim, wherein non-linear model nodes **(*MKᵢ*)** are used in the autoencoder, preferably with the aid of a sigmoid function or ReLU function.

3. Method according to one of the preceding claims, wherein the at least one previously determined reconstruction error in step f) is zero if method step f) is executed for the first time.

4. Method according to one of the preceding claims, wherein the estimation takes place with the aid of a regression method.

5. Method according to one of the preceding claims, wherein the process model further comprises input nodes with respective input weights **(*p₁ - pₙ*)*,*** which are normalised over all input weights **(*p₂ - pₙ*)*,*** and output nodes with respective output weights **(p'₁** - **p'ₙ),** which are normalised over all output weights **(*****p'₁** -* ***p'ₙ*)*,*** between which the model nodes **(*MKᵢ*)** are formed, and the at least one individual contribution of model nodes to the process deviations is ascertained in each case by comparing a model weight **(*MGᵢ*)** for at least one individual input node and at least one individual output node, which are normalised in each case over all input nodes or in each case over all output nodes, with a respective predetermined value range for the respective model weight, and the at least one individual contribution corresponds to at least the node whose weight lies within the predetermined value range.

6. Computing device (CPU) for detecting deviations in a production process with process parameters, comprising a memory (MEM), which is configured to execute the method according to one of the preceding claims.

7. System (S) for detecting deviations in a production process with process parameters, comprising a production plant (PROD) and a device (CPU) according to the preceding claim.

8. Computer program comprising instructions which, when executed by a computer, cause the computer to execute the method according to one of claims 1 to 5.

9. Electronically readable data carrier with readable control information stored thereon, which comprises at least the computer program according to the preceding claim and is designed in such a way that, when the data carrier is used in a computing facility, it performs the method according to one of claims 1 to 5.

10. Data carrier signal, which transfers the computer program according to claim 8.

## Revendications

1. Procédé mis en œuvre par ordinateur de détection d'écarts dans un processus de fabrication avec des paramètres de processus, dans lequel un dispositif de calcul (CPU) avec une mémoire (MEM) est prévu, **caractérisé en ce que** les étapes suivantes sont exécutées :
a) mise à disposition, pour le dispositif de calcul (CPU), de données de processus de référence d'un processeur de fabrication de référence qui comprend des paramètres de référence du processus de fabrication,
b) création et entraînement d'un modèle de processus avec des nœuds de modèle (***MKᵢ***) et des poids de modèle (***MGᵢ***) attribués sur la base d'un auto-encodeur avec les données de processus de référence,
c) affectation, au moins en partie, de nœuds de modèle du modèle de processus à des paramètres du processus de fabrication,
d) mise à disposition, pour le dispositif de calcul (CPU), de données de processus en temps réel issues d'un processus de fabrication actuel, qui comprend les paramètres actuels dudit processus de fabrication,
e) détermination des écarts de processus par rapport aux données de processus actuelles à l'aide du modèle de processus via la définition d'une erreur de reconstruction et l'émission des poids du modèle (***MGᵢ***) des nœuds du modèle (***MKᵢ***)*,* et détermination des contributions individuelles des nœuds du modèle aux écarts de processus et définition d'au moins une contribution individuelle qui se situe en dehors d'une plage de valeurs prédéfinie pour la contribution concernée,
f) estimation de l'évolution future de l'erreur de reconstruction à partir de l'erreur de reconstruction actuellement définie et d'au moins une erreur de reconstruction prédéterminée pour une durée prédéterminée, et enregistrement de l'erreur de reconstruction dans la mémoire (MEM) en tant qu'au moins une erreur de reconstruction définie auparavant pour une estimation ultérieure,
g) vérification pour déterminer si l'évolution future estimée de l'erreur de reconstruction pour la durée prédéfinie se situe dans une plage de valeurs prédéfinie, si oui (J), poursuivre à l'étape d), si non (N), émission d'une alarme (AL) et transmission d'au moins une contribution individuelle déterminée lors de l'étape e) au processus de fabrication de référence et utilisation au cours d'un processus de fabrication ultérieur lors de l'étape d).

2. Procédé selon la revendication précédente, dans lequel l'auto-encodeur utilise des nœuds de modèle non linéaires (***MKᵢ***), de préférence à l'aide d'une fonction sigmoïde ou d'une fonction ReLU.

3. Procédé selon l'une des revendications précédentes, dans lequel l'au moins une erreur de reconstruction définie auparavant lors de l'étape f) est nulle si l'étape f) est exécutée pour la première fois.

4. Procédé selon l'une des revendications précédentes, dans lequel l'estimation est effectuée à l'aide d'une méthode de régression.

5. Procédé selon l'une des revendications précédentes, dans lequel le modèle de processus comprend en outre des nœuds d'entrée avec des poids d'entrée (***p₁**-**pₙ***) respectifs, qui sont normalisés par rapport à l'ensemble des poids d'entrée (***p₁**-**pₙ***)*,* et des nœuds de sortie avec des poids de sortie (***p**'₁-**p**'ₙ*) respectifs, qui sont normalisés par rapport à l'ensemble des poids de sortie (***p**'₁-**p**'ₙ*)*,* entre lesquels les nœuds du modèle (***MKᵢ***) sont formés, et la contribution individuelle d'au moins un nœud du modèle aux écarts de processus est déterminée via la comparaison respectivement d'un poids du modèle **(*MGᵢ*)** pour au moins un nœud d'entrée individuel et au moins un nœud de sortie individuel, qui sont respectivement normalisés par rapport à l'ensemble des nœuds d'entrée et/ou à l'ensemble des nœuds de sortie, avec une plage de valeurs prédéterminée respective pour le poids du modèle correspondant, et ladite au moins une contribution individuelle correspond à ce au moins un nœud dont le poids se situe dans la plage de valeurs prédéterminée.

6. Dispositif de calcul (CPU) pour la détection d'écarts dans un processus de fabrication avec des paramètres de processus, comprenant une mémoire (MEM) qui est configurée de manière à exécuter le procédé selon l'une des revendications précédentes.

7. Système (S) de détection d'écarts dans un processus de fabrication avec des paramètres de processus, comprenant une installation de production (PROD) et un dispositif (CPU) selon la revendication précédente.

8. Programme d'ordinateur comprenant des instructions qui, lorsqu'elles sont exécutées par un ordinateur, amènent celui-ci à mettre en œuvre le procédé selon l'une des revendications 1 à 5.

9. Support de données lisible électroniquement sur lequel sont enregistrées des informations de commande lisibles, qui comprennent au moins le programme d'ordinateur selon la revendication précédente et qui sont conçues de telle sorte que, lors de l'utilisation du support de données dans un dispositif de calcul, elles exécutent le procédé selon l'une des revendications 1 à 5.

10. Signal de support de données que le programme d'ordinateur transmet selon la revendication 8.
